# DEMANDE DE BREVET EUROPEEN

(11) **EP 1 128 638 A1**
(43) Date de publication de la demande: **29.08.2001**
(21) Numéro de dépôt: 01200629.2
(22) Date de dépôt: 14.02.2001
(51) Int. Cl.: H04M 1/247

(54) **Appareil comprenant un écran de visualisation et procédé pour visualiser des informations**

(30) Priorité: 23.02.2000 FR 0002265
(71) Demandeur: Koninklijke Philips Electronics N.V., 5621 BA Eindhoven (NL)
(72) Inventeur: Ringot, Nicolas, 75008 Paris (FR)
(74) Mandataire: Chaffraix, Jean

(57) **Abrégé**

Cet appareil comprend un écran de visualisation (3) pour afficher des rubriques d'un menu et/ou des informations en agissant sur des touches (12, 13, 14, 15, 16 et 17-FIG.1).

Pour s'adapter aux différentes modalités de visualisation, les informations affichées sont disposées selon un plan d'implantation dudit écran divisé en zones (Z1, Z2, Z3 et Z4). En cas de besoin certaines de ces zones peuvent être fusionnées.

Application aux radiotéléphones mobiles connectés à un service WAP.

## Description

L'invention concerne un appareil comprenant un écran de visualisation pour afficher des rubriques d'un menu et/ou des informations en agissant sur des touches.

L'invention trouve d'importantes applications lorsqu'il faut visualiser de nombreuses informations sur un écran de petites dimensions. C'est le cas notamment, lorsque l'appareil est un radiotéléphone mobile. Cet affichage d informations devient un problème important avec le système WAP (« Wireless Application Protocol »). En outre, on est confronté aux problèmes de navigations pour aller d'une série d'informations à l'autre. On pourra à ce sujet consulter le site web : http://www.wapforum.org/

L'invention concerne donc également un procédé pour afficher des informations sur un écran plutôt de petite taille et pour naviguer parmi toute l'information à visualiser.

Un tel appareil est connu du document de brevet européen déposé sous le numéro 99203507.1. Bien que cet appareil donne satisfaction, il n'est pas très adapté pour l'affichage et la navigation imposés par le système WAP.

La présente invention propose un appareil du genre mentionné dans le préambule, qui est particulièrement adapté à ladite navigation sans nécessiter trop de touches supplémentaires et avec la possibilité de le faire avec un seul doigt.

Pour cela, un tel appareil est remarquable en ce que qu'il comporte, en outre, des moyens pour visualiser sur ce même écran des informations affichées, disposées selon un plan d'implantation dudit écran divisé en zones.

Selon l'invention, le procédé pour visualiser des informations et naviguer est remarquable en ce que l'on divise l'écran en plusieurs zones et que certaines d'entre elles peuvent être fusionnées entre elles en fonction de l'information à traiter.

La description suivante, faite en regard des dessins ci-annexés, le tout donné à titre d'exemples non limitatifs fera bien comprendre comment l'invention peut être réalisée. Sur les dessins :
La figure 1 montre un appareil conforme à l'invention,
La figure 2 montre le schéma de l'appareil de la figure 1,
La figure 3 montre le découpage en zones de l'écran de l'appareil,
La figure 4 montre un premier exemple de visualisation sur ledit écran,
La figure 5 montre un deuxième exemple de visualisation sur ledit écran,
La figure 6 montre un troisième exemple de visualisation sur ledit écran,
La figure 7 montre un quatrième exemple de visualisation sur ledit écran.

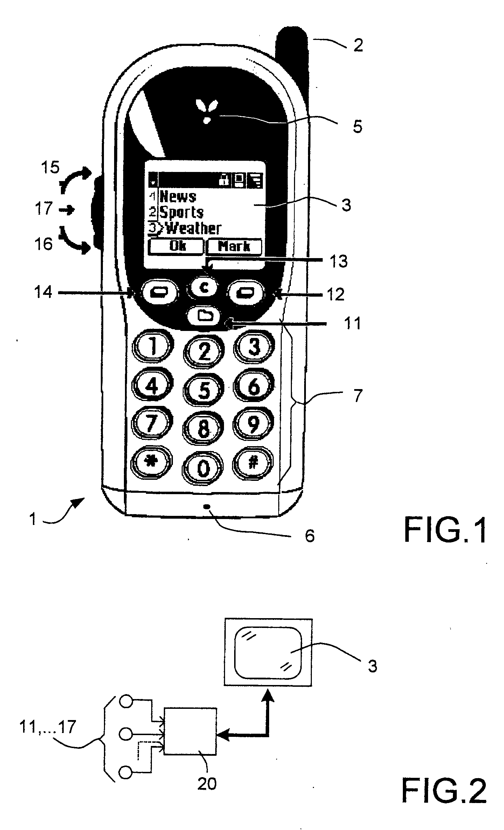

A la figure 1, on a représenté un appareil de téléphonie mobile formé d'un boîtier 1 comportant, notamment, une antenne 2, un écran 3, un écouteur 5, un microphone 6, un clavier 7 et différents autres boutons de manoeuvre 11, 12, 13, 14, 15, 16 et 17. Les boutons 11 à 14 sont de simples boutons sur lesquels on appuie, tandis que les boutons 15 et 16 simulent une rotation. Le bouton 17 valide une option.

La figure 2 montre un schéma de fonctionnement de l'appareil. Les éléments communs avec ceux de la figure précédente portent les mêmes références. Le fonctionnement de l'invention est défini par un ensemble à processeur 20 qui, en analysant les actions effectuées sur les touches (notamment les touches 11 à 17 qui sont plus concernées par l'invention), détermine les informations à afficher.

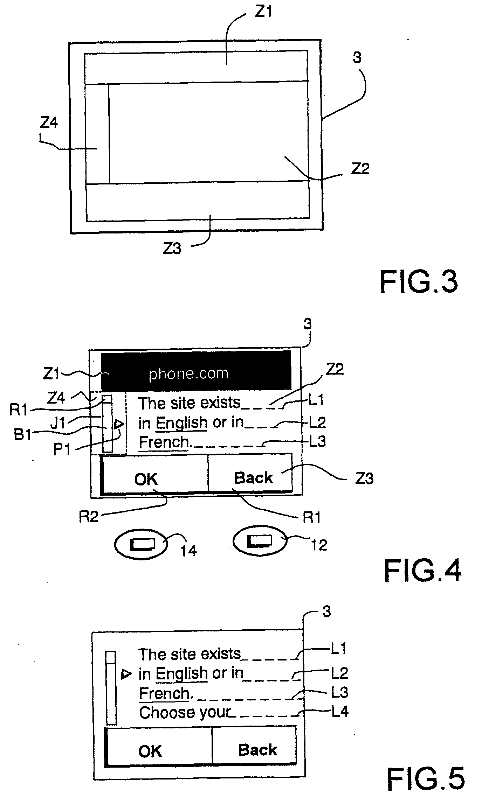

Conformément à l'invention, pour gérer les informations à visualiser et en vue d'obtenir ce qu'on appelle une navigation parmi les informations provenant d'un serveur fournissant des informations « WAP » précitées, l'écran est divisé en plusieurs zones Z1 (ou zone de titre), Z2 (ou zone d'informations), Z3 (ou zone de touche) et Z4 (ou zone d'ascenseur) comme cela est montré à la figure 3.

Selon le mode de réalisation décrit, la zone Z1 est affectée au titre de l'écran, la zone 2 à l'affichage des informations provenant du serveur « WAP » ou aux rubriques des menus qui régissent le fonctionnement de l'appareil montré à la figure 1. La zone 3 est affectée à l'affichage de la fonction des boutons 12 et 14. En effet selon les circonstances, ces boutons peuvent avoir des fonctions différentes ou même supprimées, comme cela sera décrit dans la suite du présent mémoire. La zone 4 est la zone affectée à une fonction connue sous le nom d'ascenseur. Elle montre le niveau, ou une indication de la ligne des informations qui sont affichées.

La figure 4 montre un premier exemple d'écran. Dans ce premier exemple, les caractères de la zone 1 sont écrits en couleur claire tandis que le fond est en couleur foncée. La zone 1 est montrée en vidéo. La zone Z2 montre quelques lignes d'informations provenant d'un serveur WAP. Dans l'exemple montré à cette figure, trois lignes L1, L2 et L3 sont affichées. La zone Z3 montre la fonction des touches 12 et 14. Sur ce premier exemple, un appui sur la touche 12 qui se situe au dessous du rectangle R1 provoque l'apparition de l'image précédente. Un appui sur la touche 14 qui est située en dessous d'un rectangle R2 de la zone Z3 permet de valider une information affichée sur la zone Z2 et pointée par un indicateur situé dans la zone Z4. Cette zone Z4 comporte deux éléments : une jauge J1 et un indicateur de pointage P1. L'indicateur de pointage P1 est aligné sur la deuxième ligne L2 des informations affichées dans la zone Z2. La jauge J1 est formée d'une bande B1 sur laquelle se déplace un repère R1 qui montre à quel niveau les informations visualisées sur l'écran 3 se situent dans la page d'informations transmises. Ainsi, si ce sont les premières lignes qui sont visualisées, l'indicateur de pointage sera à une position haute comme cela est montré sur la figure. Si ce sont les dernières lignes, l'indicateur sera situé au bas de la bande B1.

La figure 5 montre un deuxième exemple de disposition des informations. Sur cette figure, la zone Z1 a été fusionnée avec la zone Z2 de sorte que celle-ci occupe plus de place. Ainsi il est possible de visualiser quatre lignes L1, L2, L3 et L4 dans cette zone Z2.

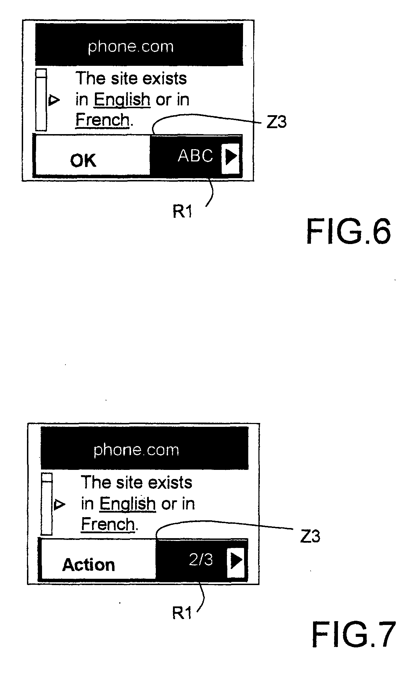

La figure 6 montre un troisième exemple de disposition de l'information. Dans cet exemple, le rectangle R1 de la zone Z3 est utilisé pour visualiser la possibilité de faire appel au mode « édition ».

La figure 7 montre un troisième exemple de disposition des informations. Dans cet exemple, le rectangle R1 est appelé encore à visualiser d'autres fonctions. Il est utilisé pour sélectionner une action cachée, lorsque plus de deux actions sont offertes dans le contexte proposé par la page WAP affichée.

Ainsi, par appui des touche 12 et 14 et en manoeuvrant les touches 15 et 16, la navigation dans les différents menus issus de pages « WAP » est largement facilité. Cette navigation peut même être effectuée au moyen d'un seul doigt. Ainsi ce seul doigt peut agir sur les touches 15 et 16 situées sur le côté du boîtier pour déplacer l'indicateur de pointage P1.

On se rend donc compte que l'appareil de l'invention satisfait les spécifications du système WAP déjà mentionné.

## Revendications

1. Appareil comprenant un écran de visualisation pour afficher des rubriques d'un menu et/ou des informations en agissant sur des touches, caractérisé en ce qu'il comporte, en outre, des moyens pour visualiser sur ce même écran des informations affichées, disposées selon un plan d'implantation dudit écran divisé en zones.

2. Appareil selon la revendication 1, caractérisé en ce qu'il est prévu des moyens de navigation pour sélectionner et valider les informations affichées en manipulant une seule commande.

3. Appareil selon la revendication 1 ou 2, caractérisé en ce qu'il comporte des moyens de fusion de zones pour ménager plus de place à au moins une autre zone.

4. Appareil selon l'une des revendications 1 à 3, caractérisé en ce que les zones sont affectées, notamment, en une zone de titre, une zone d'informations pour afficher des informations d'un serveur, une zone de touches et une zone d'indication pour fournir une indication sur l'emplacement de l'écran parmi l'information fournie par le serveur.

5. Appareil selon l'une des revendications 1 à 4, caractérisé en ce qu'il correspond aux spécifications WAP.

6. Procédé pour visualiser des informations et naviguer, convenant à un appareil selon l'une des revendications 1 à 5 , caractérisé en ce que l'on divise l'écran en plusieurs zones et que certaines d'entre elles peuvent être fusionnées entre elles en fonction de l'information à traiter.
